# EUROPÄISCHE PATENTANMELDUNG

(11) **EP 1 195 598 A2**
(43) Veröffentlichungstag der Anmeldung: **10.04.2002**
(21) Anmeldenummer: 01120112.6
(22) Anmeldetag: 21.08.2001
(51) Int. Cl.: G01N 21/55, B60S 1/08

(54) **Feuchtigkeitssensor**

(30) Priorität: 05.10.2000 DE 10049401
(71) Anmelder: HSM Holographic Systems München GmbH, 85652 Pliening (DE)
(72) Erfinder: Dausmann, Günther, Dipl.-Ing., 85435 Erding (DE); Yang, Zishao, Dr., 85435 Erding (DE); Hochenbleicher, Gerhard, Dr., 82256 Fürstenfeldbruck (DE)
(74) Vertreter: Lettau, Christoph, Dr.

(57) **Zusammenfassung**

Die Erfindung betrifft einen Feuchtigkeitssensor, bei dem mit einer Lichtquelle Licht in eine lichtleitende Schicht eingekoppelt wird, dort Totalreflexion erfährt, solange das umgebende Medium eine Feuchtigkeit kleiner als eine Grenzfeuchtigkeit aufweist, und keine Totalreflexion erfährt, wenn die Feuchtigkeit des Mediums eine Grenzfeuchtigkeit übersteigt, einem Auskoppelelement zum Auskoppeln des Lichts aus der Lichtleitschicht und einem Detektor für das ausgekoppelte Licht. Erfindungsgemäß ist ein Reflexionshologramm auf einem Teil der Lichtleitschicht vorgesehen, das unter Einfall eines Lichtstrahls unter dem Winkel, mit dem sich das Licht in der Lichtleitschicht ausbreitet, einen Lichtstrahl rekonstruiert, der dem einfallenden Lichtstrahl im wesentlichen entgegenläuft. Weiterhin betrifft die Erfindung einen entsprechenden Feuchtigkeitssensor, bei dem als Lichtleitschicht eine Scheibe, insbesondere eine Flug- oder Fahrzeugwindschutzscheibe eingesetzt wird.

## Beschreibung

Die Erfindung betrifft einen Feuchtigkeitssensor mit den Merkmalen des Oberbegriffes des Anspruchs 1 bzw. den Merkmalen des Oberbegriffes des Anspruchs 4.

Zum Beispiel in der Kraftfahrzeugindustrie werden heutzutage Regensensoren eingesetzt, um eine automatische Steuerung der Scheibenwischer zu erreichen. Bei einem bekannten Regensensor wird in die Windschutzscheibe von innen ein Lichtstrahl mit Hilfe einer Strahleinkoppeleinrichtung eingekoppelt. Dabei wird ein Winkel gewählt, der unter normalen Umständen, d. h. bei trockener Außenluft, zur Totalreflexion des Lichtstrahls innerhalb der Windschutzscheibe führt. An anderer Stelle wird der Lichtstrahl wieder ausgekoppelt und zu einem Detektor geführt. Einkoppel-und Auskoppeleinrichtung befinden sich auf der Innenseite der Windschutzscheibe. Trifft ein Wassertropfen oder Feuchtigkeit auf die Außenseite der Windschutzscheibe, so ändert sich in diesem Bereich der Brechungsindex des Mediums, das an die Windschutzscheibe angrenzt. Bei geeigneter Wahl des Einkoppelwinkels findet bei einem solchen feuchten Außenmedium keine Totalreflexion innerhalb der Windschutzscheibe mehr statt. Der Lichtstrahl tritt aus der Scheibe aus und erreicht nicht den Detektor. Dieser Intensitätsverlust kann mit Hilfe eines Lichtintensitätsmeßgeräts nachgewiesen werden. Ist dessen Signal z. B. kleiner als ein vorgegebener Grenzwert, werden die Scheibenwischer eingeschaltet.

Die Strahlein- bzw. -auskopplung kann dabei z. B. mit Hilfe von Prismen geschehen, die von innen an die Windschutzscheibe angebracht sind und ebenfalls aus Glas bestehen. Mit ihrer Grundfläche sind diese Prismen an der Innenseite der Windschutzscheibe angebracht. Der Winkel der Prismen ist dabei so gewählt, daß die Seitenfläche des Prismas senkrecht auf der Richtung steht, in der der Strahl sich innerhalb der Windschutzscheibe fortpflanzen soll. Auf diese Weise ist eine Strahlein- bzw. -auskopplung eines Lichtstrahls möglich, der sich innerhalb der Windschutzscheibe unter Totalreflexion an der Grenzfläche zwischen Windschutzscheibe und umgebendem Medium bewegt.

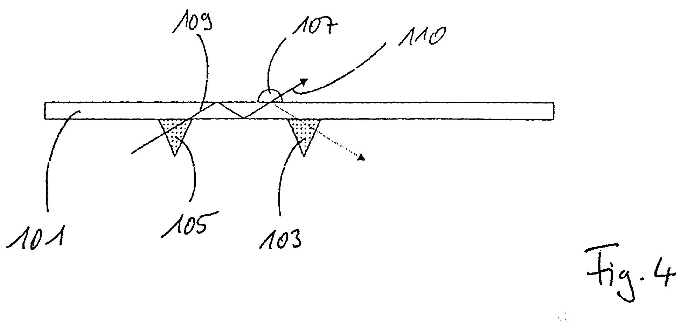

Figur 4 zeigt schematisch eine solche bekannte Anordnung. 101 bezeichnet die Windschutzscheibe, 103 das Strahlauskopplungsprisma und 105 das Strahleinkopplungsprisma. Der Lichtstrahl 109 wird innerhalb der Windschutzscheibe total reflektiert, wenn das umgebende Medium Luft ist. Befindet sich ein Wassertropfen 107 auf der Windschutzscheibe, tritt der Lichtstrahl aus der Windschutzscheibe aus und erreicht nicht mehr die Strahlauskoppeleinrichtung 103.

Bei einer solchen Feuchtigkeitssensoranordnung des Standes der Technik müssen auf die Innenseite der Windschutzscheibe die Strahleinkoppel- bzw. Strahlauskoppelprismen aufgebracht werden, wodurch eine nicht glatte Struktur der Innenseite der Windschutzscheibe durch die zusätzlichen Einheiten entsteht.

Ein solcher Regensensor kann sich nicht im Sichtbereich des Fahrzeugführers befinden, da durch die zusätzlichen Strukturen eine Brechung bzw. Streuung des Lichts erfolgt, das durch die Windschutzscheibe gelangen soll. Derartige Reflexionseffekte sind natürlich für die Sicherheit abträglich. Dementsprechend muß der Regensensor in einem Bereich der Windschutzscheibe ausgebildet sein, der nicht im Sichtfeld liegt und möglichst klein ist. Deshalb werden solche Regensensoren z. B. im Bereich einer Rückspiegelklebebefestigung untergebracht.

Damit sowohl Lichtquelle als auch Empfänger und die Strahleinkoppel- bzw. -auskoppeleinrichtungen insgesamt eine kompakte Einheit bilden, müssen Strahleinkoppel- und -auskoppeleinrichtung nah beieinander liegen. Dies begrenzt den Meßbereich und die Genauigkeit auf eine oder wenige Totalreflexionen zwischen Strahleinkopplung und -auskopplung.

Ausgehend von diesem Stand der Technik ist es die Aufgabe der vorliegenden Erfindung, einen Feuchtigkeitssensor anzugeben, der einen größeren Meßbereich erlaubt.

Diese Aufgabe wird mit einem Feuchtigkeitssensor mit den Merkmalen des Anspruchs 1 bzw. einem Feuchtigkeitssensor mit den Merkmalen des Anspruchs 4 gelöst.

Vorteilhafte Ausgestaltungen sind Gegenstand der Unteransprüche.

Erfindungsgemäß ist ein Reflexionshologramm auf einem Teil der Lichtleiterschicht bzw. der Scheibe vorgesehen, das eine derartige holographische Struktur aufweist, daß unter Einfall eines Lichtstrahls unter einem Winkel α, unter dem das Licht innerhalb der Lichtleitschicht bzw. der Scheibe total reflektiert wird, auf die Grenzfläche zwischen Reflexionshologramm und Lichtleitschicht bzw. Scheibe, ein Lichtstrahl rekonstruiert wird, der dem einfallenden Lichtstrahl im wesentlichen entgegenläuft.

Bei einer Ausführungsform ist die Lichtleitschicht Teil einer Feuchtigkeitssensoranordnung. Bei einer anderen Ausführungsform wird als Lichtleitschicht die Scheibe, z. B. eine Windschutzscheibe eingesetzt.

Die erfindungsgemäßen Vorrichtungen bieten u. a. den Vorteil eines großen räumlichen Meßbereiches. Das Reflexionshologramm ist im wesentlichen transparent. Nur Licht, das unter einem bestimmten Winkel einfällt, wird zur holographischen Rekonstruktion verwendet. Dementsprechend kann das Reflexionshologramm an beliebiger Stelle der Windschutzscheibe aufgebracht werden, ohne daß die Transparenz der Windschutzscheibe wesentlich darunter leidet. Durch die Rekonstruktion des Meßlichtstrahls in sich selbst zurück ist es möglich, daß Einkoppel- und Auskoppeleinheit nahe beieinanderliegen. Trotzdem ist der räumliche Meßbereich nicht durch den Abstand zwischen Einkoppel- und Auskoppeleinheit bestimmt, sondern durch den doppelten Abstand zwischen Einkoppel- bzw. Auskoppeleinrichtung und dem Reflexionshologramm. Auf diese Weise kann ein sehr viel größerer räumlicher Meßbereich ausgenutzt werden, so daß eine vielfache Totalreflexion möglich ist. So läßt sich die Genauigkeit der Feuchtigkeitsmessung erhöhen. Im Extremfall kann die gesamte Ausdehnung der Windschutzscheibe eingesetzt werden.

Ein weiterer Vorteil liegt darin, daß der räumliche Meßbereich auch den Bereich der Windschutzscheibe erfassen kann, in dem der Scheibenwischer tätig ist. Zum Beispiel bei sehr geringem Regenfall wird durch einige wenige Tropfen der Feuchtigkeitssensor ansprechen und den Scheibenwischer in Bewegung setzen. Bei bekannten Regensensoren überstreicht der Scheibenwischer den Feuchtigkeitssensor in der Regel nicht, da er nicht im Sichtbereich angeordnet sein kann. Die wenigen Regentropfen verbleiben also auf dem Feuchtigkeitssensor und der Scheibenwischer wird nicht wieder ausgeschaltet. Beim erfindungsgemäßen Feuchtigkeitssensor kann der räumliche Meßbereich von dem Scheibenwischer überstrichen werden. Ist nur geringer Regenfall vorhanden, werden einige wenige Tropfen, die zum Einschalten des Scheibenwischers geführt haben, von diesem weggewischt und der Feuchtigkeitssensor schaltet den Scheibenwischer wieder aus.

Die Schichten des Feuchtigkeitssensors einschließlich der Lichtleitschicht können z. B. als Einheit in einer Folie zusammengefaßt werden, die auf die Windschutzscheibe aufgebracht wird. Das Licht kann z. B. durch die Scheibe auf das Einkoppelelement geschickt werden. Bei einer anderen Ausführungsform werden die einzelnen Elemente derart auf die der Oberfläche einer Scheibe, auf der die Feuchtigkeit gemessen werden soll, abgewandten Seite aufgebracht, daß die Scheibe selbst als lichtleitende Schicht wirkt.

Bei einer vorteilhaften Ausgestaltung der Erfindung umfaßt das Einkoppelelement ein transmissionsholographisches Element mit einer Rekonstruktionsrichtung innerhalb der Lichtleitschicht bzw. der Scheibe gleich dem gewünschten Ausbreitungswinkel in der Schicht bzw. der Scheibe, wenn das Licht aus der Richtung der Lichtquelle einfällt. Ebenso vorteilhaft ist es, wenn das Auskoppelelement ein transmissionsholographisches Element mit einer Rekonstruktionsrichtung in Richtung des Empfängers umfaßt, wenn das Licht im wesentlichen unter dem Ausbreitungswinkel in der Lichtleitschicht bzw. der Scheibe auf das Auskoppelelement fällt. Derartige transmissionsholographische Elemente lassen sich sehr kompakt und klein ausgestalten und erlauben eine sehr genaue Festlegung der Strahlrichtung. Eine Weiterbildung sieht vor, daß ein einzelnes Element sowohl als Einkoppel- als auch als Auskoppelelement vorgesehen ist. Auf diese Weise ist eine noch kompaktere Gestaltung möglich.

Die Lichtquelle kann z. B. eine Leuchtdiode umfassen. Ein besonders gerichtetes und in der Wellenlänge definiertes Licht läßt sich bei einer vorteilhaften Ausgestaltung durch eine Laserdiode erhalten.

In dem Bereich der lichtleitenden Schicht bzw. der Scheibe, auf der sich das Transmissionshologramm und das Reflexionshologramm nicht befinden, findet in der Regel Totalreflexion statt. Befinden sich die Transmissionshologramme und das Reflektionshologramm auf derjenigen Seite der lichtleitenden Schicht, die der Oberfläche der lichtleitenden Schicht bzw. Scheibe, auf deren Oberfläche die Feuchtigkeit nachgewiesen werden soll, abgewandten Seite, so kann zwischen dem Reflexionshologramm und dem Transmissionshologramm eine zusätzliche Hilfsreflektorhologrammstruktur vorgesehen sein. Diese Hilfsreflektorhologrammstruktur ersetzt die Totalreflexion an der Grenzfläche der lichtleitenden Schicht bzw. Scheibe, die nicht auf der Seite liegt, auf der die Feuchtigkeit nachgewiesen werden soll, durch einen holographischen Spiegel.

Zudem läßt sich mit so einer Hilfsreflektorschicht zwischen Reflexionshologramm und Transmissionshologramm eine vollständig glatte Oberfläche des gesamten Feuchtigkeitsmeßsystems auf der Scheibe bzw. der Lichtleitschicht erhalten.

Eine solche Hilfsreflektorschicht kann auch vorteilhaft eingesetzt werden, wenn diejenige Oberfläche der lichtleitenden Schicht bzw. der Scheibe, auf der sich das Transmissionshologramm und das Reflexionshologramm befindet, keine oder nur schlecht totalreflektierende Eigenschaften aufweisen würde, z. B. durch Feuchtigkeit, Verschmutzung oder Rauigkeit.

Die Hilfsreflektorhologrammschicht ist so ausgestaltet, daß bei Lichteinfall auf die Grenzfläche zwischen Lichtleitschicht und Hilfsreflektorhologramm unter einem Winkel α einen Lichtstrahl in einer Richtung rekonstruiert wird, der dem Winkel β = 180° - α entspricht. Insgesamt ergibt sich also eine Situation, die der spiegelnden Reflexion entspricht.

Die erfindungsgemäßen Feuchtigkeitssensoren lassen sich besonders vorteilhaft zur Steuerung der Scheibenwischer bei Flug- bzw. Fahrzeugen einsetzen. Dies gilt insbesondere, wenn die Scheibe selbst als lichtleitende Schicht zum Einsatz kommt. Die erfindungsgemäßen Feuchtigkeitssensoren lassen sich jedoch auch an anderen Stellen vorteilhaft einsetzen, bei denen die Feuchtigkeit auf einer Oberflächen bestimmt werden muß, oder eine Vorrichtung in Abhängigkeit der Feuchtigkeit auf einer Oberfläche gesteuert werden soll.

Im folgenden werden erfindungsgemäße Ausführungsformen des Feuchtigkeitssensors am Beispiel von Regensensoren mit Bezug zu den anliegenden Figuren erläutert. Dabei zeigt
- Fig. 1: schematisch das Funktionsprinzip eines erfindungsgemäßen Feuchtigkeitssensors,
- Fig. 2: eine erfindungsgemäße Ausführungsform eines erfindungsgemäßen Regensensors in schematischer Ansicht,
- Fig. 3: eine Seitenschnittansicht eines Teils einer Ausführungsform eines erfindungsgemäßen Feuchtigkeitssensors, und
- Fig. 4: eine schematische Teilansicht eines bekannten Regensensors.

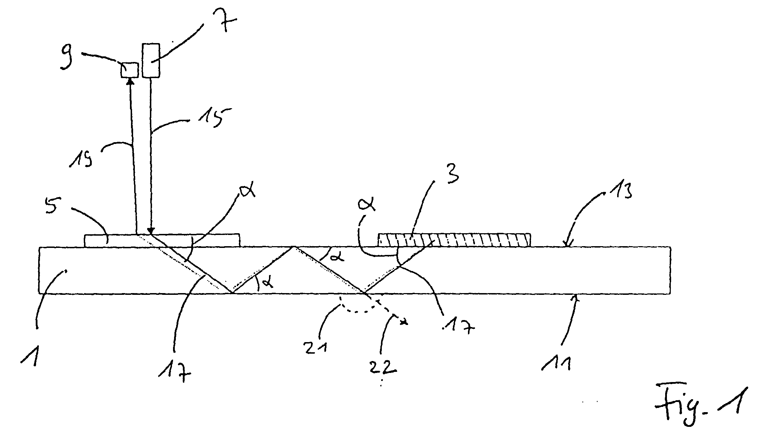

Fig. 1 zeigt eine lichtemittierende Diode 7, z. B. eine Laserdiode, die Licht in Richtung eines Transmissionshologramms 5 zur Einkopplung in die Lichtleitschicht 1 aussendet. Repräsentativ ist ein Lichtstrahl 15 angedeutet. Das Transmissionshologramm wird in bekannter Weise derart ausgestaltet, daß es bei Lichteinfall aus der Richtung der Lichtquelle 7 einen Lichtstrahl 17 rekonstruiert, der sich unter einem Winkel α in der Lichtleitschicht 1 ausbreitet. Dabei ist das Transmissionshologramm 5 derart gewählt, daß der Winkel α eine Totalreflexion an der Grenzfläche zwischen der Lichtleitschicht 1 und der umgebenden Luft ermöglicht.

Der Winkelbereich zur Totalreflexion läßt sich in bekannter Weise aus den Brechzahlen der lichtleitenden Schicht 1 und der jeweils angrenzenden Medien berechnet. Der maximale Winkel zwischen Grenzfläche und Einfallsrichtung, unter dem Totalreflexion stattfindet, läßt sich nach der Formel cos α_{G} = (Brechungsindex des angrenzenden Mediums)/(Brechungsindex der lichtleitenden Schicht) berechnen. Für Glas als lichtleitende Schicht mit einem Brechungsindex von 1,5 und Luft als angrenzendem Medium mit einem Brechungsindex von 1 ergibt sich der Winkel α_{G} zu 48°. Einfallsrichtungen, die mit einem kleineren Winkel auf die Grenzfläche zwischen lichtleitender Schicht und Umgebung treffen, werden total reflektiert.

Der Lichtstrahl 17 wird unter dem Winkel α mehrfach total reflektiert, bis er das Reflexionshologramm 3 erreicht. Dieses Reflexionshologramm ist derart ausgestaltet, daß es bei Einfall eines Lichtstrahls unter dem Winkel α einen weiteren Lichtstrahl rekonstruiert, der im wesentlichen wiederum unter dem gleichen Winkel zurückläuft.

Im Bereich des Reflexionshologramms 3 kann das Licht aus der Lichtleitschicht 1 austreten, da dort eine andere Bedingung für die Totalreflexion gilt, als wenn Luft das umgebende Medium ist.

Der durch die Lichtleiterschicht 1 zurücklaufende Strahl trifft wiederum auf das Transmissionshologramm. Hier wird ein Lichtstrahl rekonstruiert, der in Richtung 19, im wesentlichen der gleichen Richtung, aus der der einfallende Lichtstrahl 15 gekommen ist, rekonstruiert. Im Strahlengang des Lichts 19 befindet sich ein Detektor 9, z. B. eine Fotozelle zur Messung der auftreffenden Lichtintensität.

Die Lichtleitschicht 1 kann eine entsprechende Folie mit einem ausgewählten Brechungsindex sein oder aber eine Glasscheibe, z. B. die Windschutzscheibe eines Kraftfahrzeuges. 13 bezeichnet die innere Oberfläche dieser Windschutzscheibe und 11 die äußere Oberfläche. Gestrichelt angedeutet ist ein Wassertropfen 21. Im Bereich eines solchen Wassertropfens 21 ist das umgebende Medium der Lichtleitschicht 1 nicht Luft, sondern Wasser. Hier ändern sich die entsprechenden Bedingungen für die Totalreflexion. Der Grenzwinkel für die Totalreflexion z. B. beim Übergang von Glas (Brechungsindex = 1,5) zu Wasser (Brechungsindex = 1,3) ergibt sich zu α_{G} = 30°, nach der bekannten Formel cos α_{G} = (Brechungsindex von Wasser)/(Brechungsindex von Glas). Bei einer Ausführungsform mit einer Lichtleitschicht bzw. Windschutzscheibe aus Glas und umgebender Luft ergibt sich also der verwendbare Winkelbereich von α von 30 bis 48°. So ist gewährleistet, daß bei Vorliegen von Wasser auf der äußeren Oberfläche 11 der Glasscheibe 1 keine Totalreflexion auftritt und der Lichtstrahl in Richtung 22 aus der Glasscheibe austritt, wie es in Fig. 1 gestrichelt dargestellt ist. Ohne vorhandenes Wasser wird der Lichtstrahl total reflektiert.

Die Funktionsweise ist gemäß Fig. 1 ist wie folgt. Aus der Diode 7 trifft Licht auf das Transmissionshologramm und wird unter dem Winkel α in die Lichtleitschicht bzw.

Windschutzscheibe 1 eingekoppelt. Bei trockener Umgebung wird der Lichtstrahl 17 an der Grenzfläche zwischen der Lichtleitschicht bzw. der Scheibe 1 zur umgebenden Luft total reflektiert, bis er zu dem Reflexionshologramm 3 kommt. Dort wird er in sich selbst zurückrekonstruiert und durchläuft im wesentlichen denselben Weg rückwärts. Er tritt durch das Transmissionshologramm 5 wieder aus und wird dort in Richtung des Detektors 9 rekonstruiert. Zumindest bei einer ausgewählten Wellenlänge sollte die Intensität, die am Detektor nachgewiesen wird, im wesentlichen der Intensität entsprechen, die von der Lichtquelle 7 ausgesendet worden ist.

Befindet sich auf der Außenfläche 11 der Lichtleitschicht 1 bzw. der Scheibe ein Wassertropfen 21 oder Feuchtigkeit, so verändert sich in oben beschriebener Weise die Bedingung für die Totalreflexion. Der Lichtstrahl wird in einem solchen Bereich nicht mehr total reflektiert und tritt in Richtung 22 aus der Glasscheibe bzw. der Lichtleitschicht 1 aus. Es wird dementsprechend weniger oder gar kein Licht am Reflexionshologramm 3 ankommen und in sich zurückrekonstruiert. Die Intensität des Lichtstrahls nimmt ab, was sich in einer Abnahme der Intensität zumindest bei einer Wellenlänge am Detektor 9 nachweisen läßt. Ebenso wird die Intensität ggf. auf dem Weg vom Reflexionshologramm 3 zum Transmissionshologramm 5 verringert.

Im Falle eines Regensensors für einen Scheibenwischer wird ein Grenzwert festgelegt, wobei der Scheibenwischer automatisch eingeschaltet wird, wenn eine Intensität, die am Detektor festgestellt wird, unter diesen Grenzwert fällt.

Das Transmissionshologramm 5 dient dementsprechend als Auskoppel- bzw. Einkoppeleinheit und kann ein einfach herzustellendes Prägehologramm sein. Das Reflexionshologramm 3 ist bei der gezeigten Ausführungsform ein Volumenhologramm, z. B. eine Polymerschicht, in der die holographische Information aufgenommen wurde.

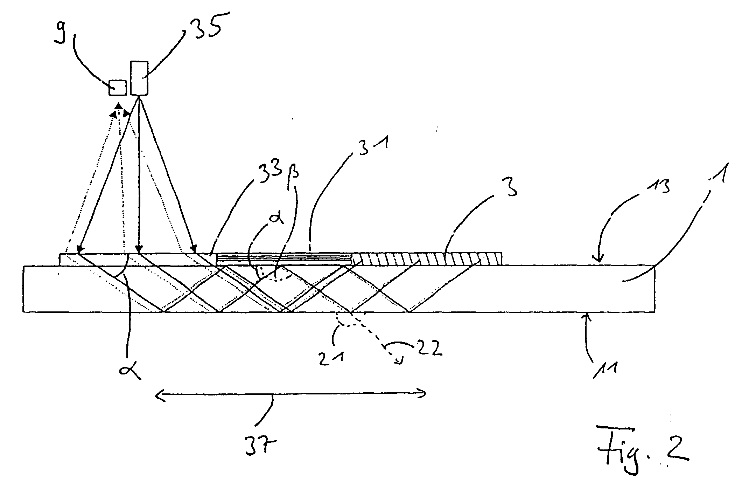

Fig. 2 zeigt schematisch eine Ausgestaltung des erfindungsgemäßen Feuchtigkeitssensors. Hier ist eine Diode 35 im Einsatz, die einen gewissen Winkelbereich bestrahlt. Auf diese Weise wird eine Fläche des Transmissionshologramms 33 beleuchtet. Dieses ist wiederum so ausgestaltet, daß es Licht, das aus Richtung der Diode 35 kommt, im wesentlichen in der gleichen Richtung unter einem Winkel α in die Lichtleitschicht 1 hinein rekonstruiert. Das zurückkehrende Licht wird von dem Transmissionshologramm 33 derart rekonstruiert, daß es auf den Detektor 9 fällt. Ansonsten entspricht das Funktionsprinzip der Ausführungsform der Fig. 1.

Der Bereich 37 ist der sensitive Bereich. Trifft in diesem Bereich auf die Außenfläche 11 der Scheibe bzw. der Lichtleitschicht 1 ein Wassertropfen oder Feuchtigkeit, so wird ein entsprechender Teil des auf die Grenzfläche auftreffenden Lichts nicht in der Schicht total reflektiert und ist für die Intensitätsmessung verloren. Das Signal am Detektor wird dementsprechend geringer sein und kann zur Steuerung z. B. des Scheibenwischers eingesetzt werden.

Bei der Ausführungsform ist zusätzlich eine Hilfsreflektorhologrammstruktur 31 gezeigt. Diese ist derart ausgestaltet, daß Licht, das unter einem Winkel α einfällt, holographisch in einem Winkel β rekonstruiert wird, der (180°-α) entspricht. Insofern wirkt das Hilfsreflektorhologramm wie eine gewöhnlicher Spiegel. So wird die störungsanfällige Totalreflexion ersetzt. Zudem ergibt sich durch das zusätzliche Hilfsreflektorhologramm eine glatte Fläche auf der Innenseite der Lichtleitschicht bzw. der Scheibe, die durch Transmissionshologramm 33, Hilfsreflektorhologramm 31 und Reflexionshologramm 3 gebildet wird.

Bei den oben beschriebenen Ausführungsformen wird als Lichtleitschicht 1 z. B. die Windschutzscheibe eines Flug- oder Fahrzeuges eingesetzt.

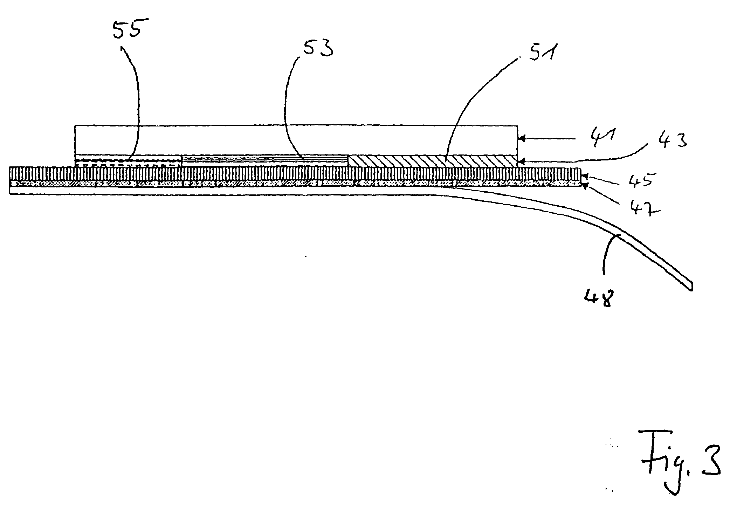

In Fig. 3 ist eine mögliche Folienstruktur zum Einsatz bei einer erfindungsgemäßen Ausführungsform in schematischer Ansicht gezeigt. Die Hologrammschicht 43 umfaßt dabei das Reflexionshologramm 51, das Hilfsreflektorhologramm 53 und das Transmissionshologramm 55 entsprechend den Elementen 3, 31 und 33, wie sie in Fig. 2 sichtbar sind. Die Hologrammschicht 43 ist auf einer Trägerschicht 45 aufgebracht, z. B. einer Folienstruktur. Diese befindet sich auf einer Kleberschicht 47. Die ganze Struktur kann mit einer Schutzschicht 41 abgedeckt sein. Vor dem Einsatz ist die Kleberschicht mit einer Papierschicht 48 abgedeckt. Zum Einsatz wird dieses Papier 48 abgezogen und die Folie mit der Kleberschicht 47 z. B. auf die Windschutzscheibe eines Kraftfahrzeuges geklebt.

Die Brechungsindizes von Trägerschicht und Kleberschicht sollten möglichst dem Brechungsindex des Materials entsprechen, auf das die Struktur geklebt wird, also z. B. einem Brechungsindex von etwa 1,5 entsprechend Glas haben, so daß sich der Lichtstrahl in seiner Richtung beim Übergang von der Trägerschicht in die Kleberschicht bzw. in die Lichtleitschicht, auf der die Kleberschicht aufgebracht ist, nicht verändert.

Mit der erfindungsgemäßen Vorrichtung ist also ein Feuchtigkeitssensor gegeben, der einen großen räumlichen Meßbereich haben kann. Die Größe des Meßbereiches hängt nicht vom Abstand der Einkoppel- und der Auskoppeleinheit ab, sondern vom Abstand des Reflexionshologramms von der Einkoppel- bzw. Auskoppeleinheit. Die gesamte Struktur ist transparent, so daß sie z. B. auf einer Windschutzscheibe auch im Sichtbereich des Fahrers aufgebracht werden kann. Durch den großen Meßbereich erhöht sich die Meßgenauigkeit durch die größere Anzahl von Totalreflexionen im Meßbereich.

## Patentansprüche

1. Feuchtigkeitssensor mit einer Lichtquelle,
- einer lichtleitenden Schicht,
- einem Einkoppelelement zum Einkoppeln des Lichts in die lichtleitende Schicht unter einem Winkel α zwischen eingekoppeltem Lichtstrahl und Oberfläche der lichtleitenden Schicht, unter dem das Licht zumindest einer Wellenlänge in der Lichtleitschicht Totalreflexion erfährt, wenn das an die Lichtleitschicht angrenzende Medium eine Feuchtigkeit kleiner als eine Grenzfeuchtigkeit aufweist, und
keine Totalreflexion erfährt, wenn das an die Lichtleitschicht angrenzende Medium eine Feuchtigkeit größer als die Grenzfeuchtigkeit aufweist,
- einem Auskoppelelement zum Auskoppeln des Lichts aus der Lichtleitschicht, und
- einen Detektor für das ausgekoppelte Licht,
**gekennzeichnet durch**
ein Reflexionshologramm (3, 51) auf einem Teil der Lichtleitschicht (1) mit einer derartigen holographisch aufgenommenen Struktur, daß unter Einfall eines Lichtstrahls (17) unter dem Winkel α auf die Grenzfläche (13) zwischen Reflexionshologramm (3, 51) und Lichtleitschicht (1) ein Lichtstrahl rekonstruiert wird, der dem einfallenden Lichtstrahl (17) im wesentlichen entgegenläuft.

2. Feuchtigkeitssensor nach Anspruch 1, **dadurch gekennzeichnet, daß** als Lichtleitschicht (1) eine Scheibe eingesetzt wird.

3. Feuchtigkeitssensor nach Anspruch 2, **dadurch gekennzeichnet, daß** die Scheibe eine Windschutzscheibe eines Fahr- oder Flugzeuges umfaßt.

4. Feuchtigkeitssensor zum Aufbringen auf eine Scheibe, insbesondere Windschutzscheibe von Fahr- oder Flugzeugen, mit
- einer Lichtquelle,
- einem Einkoppelelement zum Einkoppeln des Lichts der Lichtquelle in eine Scheibe unter einem Winkel α zwischen der Einkoppelrichtung und der Oberfläche der Scheibe, unter dem das Licht zumindest einer Wellenlänge Totalreflexion in der Scheibe erfährt, wenn das die Scheibe angrenzende Medium eine Feuchtigkeit kleiner als eine Grenzfeuchtigkeit aufweist, und keine Totalreflexion erfährt, wenn das angrenzende Medium eine Feuchtigkeit größer als eine Grenzfeuchtigkeit aufweist,
- einem Auskoppelelement zum Auskoppeln des Lichts aus der Scheibe,
- einem Detektor für das ausgekoppelte Licht,
**gekennzeichnet durch**
ein Reflexionshologramm (3, 51) auf einem Teil der Lichtleitschicht (1) mit einer derartigen holographischen Struktur, das unter Einfall eines Lichtstrahls (17) unter dem Winkel α auf die Grenzfläche zwischen Reflexionshologramm (3, 51) und Lichtleitschicht (1) ein Lichtstrahl rekonstruiert wird, der dem einfallenden Lichtstrahl (17) im wesentlichen entgegenläuft.

5. Feuchtigkeitssensor nach einem der Ansprüche 1 bis 4, **dadurch gekennzeichnet, daß** das Einkoppelelement (5, 55) ein transmissionsholographisches Element mit einer Rekonstruktionsrichtung in der Lichtleitschicht (1) bzw. der Scheibe etwa gleich dem Winkel α ist, wenn das Licht (15) aus der Richtung der Lichtquelle (7, 35) einfällt.

6. Feuchtigkeitssensor nach einem der Ansprüche 1 bis 4, **dadurch gekennzeichnet, daß** das Auskoppelelement (5, 55) ein transmissionsholographisches Element mit einer Rekonstruktionsrichtung in Richtung des Empfängers (9) ist, wenn das Licht im wesentlichen unter dem Winkel α aus der Lichtleitschicht (1) bzw. der Scheibe einfällt.

7. Feuchtigkeitssensor nach den Ansprüchen 5 und 6, **dadurch gekennzeichnet, daß** das Auskoppelelement und das Einkoppelelement durch ein einstückiges Element (5, 55) gebildet werden.

8. Feuchtigkeitssensor nach einem der Ansprüche 5 bis 7, **dadurch gekennzeichnet, daß** das transmissionsholographische Element (5, 55) bzw. die transmissionsholographischen Elemente ein Prägehologramm umfassen.

9. Feuchtigkeitssensor nach einem der Ansprüche 5 bis 7, **dadurch gekennzeichnet, daß** das transmissionsholographische Element (5, 55), bzw. die transmissionsholographischen Elemente eine Fotopolymerschicht umfassen.

10. Feuchtigkeitssensor nach einem der Ansprüche 1 bis 9, **dadurch gekennzeichnet, daß** das Reflexionshologramm (3, 51) eine Fotopolymerschicht umfaßt.

11. Feuchtigkeitssensor nach einem der Ansprüche 1 bis 10, **gekennzeichnet durch** eine Laserdiode als Lichtquelle (9).

12. Feuchtigkeitssensor nach einem der Ansprüche 1 bis 11, **dadurch gekennzeichnet, daß** sich in einem Bereich zwischen Einkoppelelement (5, 55) und Reflexionshologramm (3, 51) ein Hilfsreflektorhologramm (31) auf der Lichtleitschicht (1, 45) bzw. der Scheibe befindet, das bei Lichteinfall auf die Grenzfläche zwischen Lichtleitschicht (1) und Hilfsreflektorhologramm unter einem Winkel α einen Lichtstrahl in einer Richtung β=180°-α zwischen Lichtstrahl und Lichtleitschicht (1, 43) bzw. Scheibe rekonstruiert.

13. Verwendung eines Feuchtigkeitssensors nach einem der Ansprüche 1 bis 12 zur Steuerung eines Scheibenwischers.
